**Europäisches Patentamt**

**European Patent Office**

**Office européen des brevets**

(19)

(11) Veröffentlichungsnummer: **0 099 463**
**B1**

(12) **EUROPÄISCHE PATENTSCHRIFT**

(45) Veröffentlichungstag der Patentschrift:
**17.09.86**

(21) Anmeldenummer: **83105657.7**

(22) Anmeldetag: **09.06.83**

(51) Int. Cl.⁴: **C 08 F 2/20** // (C08F2/20, 14:06, 2:20, 18:08)

(54) **Verfahren zur Herstellung von Polymerdispersionen und ihre Verwendung.**

Verbunden mit 83901919.7/0114834 (europäische Anmeldenummer/Veröffentlichungsnummer) durch Entscheidung vom 07.12.84.

(30) Priorität: **20.07.82 DE 3227090**

(43) Veröffentlichungstag der Anmeldung:
**01.02.84 Patentblatt 84/5**

(45) Bekanntmachung des Hinweises auf die Patenterteilung:
**17.09.86 Patentblatt 86/38**

(84) Benannte Vertragsstaaten:
**BE DE FR GB IT**

(56) Entgegenhaltungen:
**EP - A - 0 070 640**
**GB - A - 941 506**

(73) Patentinhaber: **WACKER-CHEMIE GMBH, Prinzregentenstrasse 22, D-8000 München 22 (DE)**

(72) Erfinder: **Eck, Herbert, Dr. Dipl.-Chem., Burg 11, D-8263 Burghausen (DE)**
Erfinder: **Hannebaum, Manfred, Immanuel-Kant-Strasse 49a, D-8263 Burghausen (DE)**
Erfinder: **Kemenater, Christof, Dr. Dipl.-Chem., Marienberger Strasse 66, D-8263 Burghausen (DE)**

### Beschreibung

Die vorliegende Erfindung betrifft ein verbessertes Verfahren zur Herstellung von durch Schutzkolloid, insbesondere durch Polyvinylalkohol (PVAL) stabilisierten wässrigen Polymerdispersionen durch einstufige radikalische Polymerisation von Vinylhalogeniden und/oder Vinylalkanoaten gegebenenfalls zusammen mit bis zu 50 Gew.-% anderen damit copolymerisierbaren ethylenisch ungesättigten Verbindungen.

Die Herstellung wässriger Dispersionen von Polymeren der o.g. Art durch Emulsionspolymerisation ist prinzipiell bekannt. Das zur Stabilisierung der Dispersionen notwendige Dispergierhilfsmittel, nämlich Emulgator gegebenenfalls in Kombination mit Schutzkolloid, wird dabei im allgemeinen vorgelegt (vgl. EP-B-590, DE-B-11 80 133 und DE-A-17 70 395).

Zur Erzielung spezieller Effekte (z.B. Vergröberung oder bimodale Teilchengrössenverteilung) wurde auch bereits vorgeschlagen, zunächst in Abwesenheit von Emulgator die Polymerisation zu beginnen und diesen oder die Ausgangsstoffe zu seiner Bildung erst im Verlauf der Polymerisation zuzusetzen (vgl. DE-B-15 20 849 und DE-A- 28 37 992).

Es bestand nun die Notwendigkeit, ein Verfahren zu entwickeln, mit dem Dispersionen hergestellt werden können, die sich u.a. für den Einsatz bei der Herstellung von Klebstoffen, bei der Beschichtung von Papier, Textilien, Faservliesen u. ä., sowie als Zusatz zu Mörtel und Betonmischungen und als filmbildende Bestandteile in Anstrichfarben eignen und sich auch bei hohen Festgehalten durch niedrige Strukturviskosität und niedrige Viskosität auszeichnen.

Letztere Eigenschaft ist besonders vorteilhaft, sofern beabsichtigt ist, redispergierbare Pulver herzustellen, da dann auch Dispersionen mit hohem Festgehalt problemlos verdüst werden können. So besitzen herkömmlich hergestellte Dispersionen, denen für die Herstellung von redispergierbaren Pulvern extra noch Schutzkolloide zugesetzt werden, dadurch bedingt, im allgemeinen höhere Viskosität, höhere Strukturviskosität.

Die vorstehend genannten Aufgaben können in überraschender Weise durch die vorliegende Erfindung gelöst werden. Überdies können nach diesem neuen Verfahren auch Dispersionen ethylenhaltiger Polymerisate hergestellt werden, die auch bei Gehalten von über 10 Gew.-%, ja sogar über 15 Gew.-% und auch noch über 20 Gew.-% Ethyleneinheiten im Polymeren noch eine hohe Anzugsgeschwindigkeit besitzen und daher auch als Klebstoffe sehr gut geeignet sind.

Gegenstand der Erfindung ist ein Verfahren zur Herstellung von wässrigen Polymerdispersionen, die durch Schutzkolloid, vorzugsweise bei der Herstellung nur durch Schutzkolloid stabilisiert sind, mit Festgehalten von 20 bis 75, vorzugsweise 20 bis 70, insbesondere 30 bis 60 Gew.-%, bezogen auf Gesamtgewicht, durch einstufige Polymerisation von bei den Reaktionsbedingungen flüssigen Monomeren, von denen mindestens 50 Gew.-% aus Vinylhalogeniden vorzugsweise Vinylchlorid, und/oder Vinylalkanoaten, vorzugsweise Vinylacetat bestehen, und gegebenenfalls Ethylen bis zu einem Partialdruck von 200 bar bei Temperaturen von 0 bis 120 °C, vorzugsweise 20 bis 100 °C, und Drücken bis 200 bar mittels zumindest teilweise wasserlöslicher Radikalinitiatorsysteme und gegebenenfalls in Gegenwart üblicher Zusatzstoffe. Das Verfahren ist dadurch gekennzeichnet, dass mit der Dosierung von Schutzkolloid, vorzugsweise mindestens einem PVAL mit einem Hydrolysegrad von 70 bis 99,8 mol-% und einem mittleren Polymerisationsgrad $\overline{P}_n$ von 200 bis 3000, als ersten Dispergierhilfsstoff erst nach einem Umsatz von 1 bis 60 Gew.-%, vorzugsweise 2 bis 25 Gew.-%, bezogen auf Gesamtgewicht der bei den Reaktionsbedingungen flüssigen Monomeren, begonnen wird.

In einer bevorzugten Ausführungsform werden 1 bis 40 Gew.-%, insbesondere 5 bis 30 Gew.-% der bei den Reaktionsbedingungen flüssigen Monomeren vorgelegt. Die restliche Menge dieser Monomeren, also 60 bis 99 Gew.-%, bzw. insbesondere 70 bis 95 Gew.-%, werden im Laufe der Polymerisation, vorzugsweise im Masse ihres Verbrauches dosiert. Dabei hat es sich vielfach als vorteilhaft erwiesen, die Konzentration dieser Monomeren in der Reaktionsmischung bis zur Beendigung der Dosierung etwa auf dem Niveau zu halten, das vorgelegt worden ist, z.B. 0,2 und 30, vorzugsweise 1 bis 21, insbesondere 1,5 bis 18 Gew.-% (bezogen auf Gesamtgewicht des Reaktionsgemisches). Es ist aber selbstverständlich möglich, davon abzuweichen, z.B. wenn besondere Effekte erzielt werden sollen.

Unter «bei den Reaktionsbedingungen flüssigen Monomeren» werden im Rahmen dieser Anmeldung solche ethylenisch ungesättigten polymerisierbaren Verbindungen verstanden, die im Bereich von 0 bis 120 °C und bis 200 bar verflüssigt werden können oder bereits flüssig sind. Als Beispiele seien in erster Linie die Vinylhalogenide, wie Vinylfluorid, Vinylbromid, vorzugsweise Vinylchlorid, sowie die Vinylalkanoate (Vinylester gesättigter gerad- oder verzweigtkettiger Carbonsäuren vorzugsweise mit bis zu 20 C-Atomen) genannt, wie Vinylformiat, -propionat, -butyrat, -ethylhexanoat, -laurat, -stearat, -isotridecanoat, Vinylester der Versatic[R]-säuren und vorzugsweise Vinylacetat. Die Summe dieser Monomeren, insbesondere des Vinylchlorids und des Vinylacetats, beträgt mindestens 50 Gew.-%, vorzugsweise mindestens 80 Gew.-% der Gesamtmenge der bei den angegebenen Reaktionsbedingungen flüssigen Monomeren. Als weitere solche Monomere können, neben dem genannten Vinylchlorid und Vinylacetat, sowie einzelnen oder mehreren der anderen Vinylhalogenide und/oder -alkanoate, bis besonders vorzugsweise 20 Gew.-%, auch eingesetzt werden:

– Mono- und Dialkyl-, -glycidyl- und -hydroxyalkylester ethylenisch ungesättigter Mono- und Dicarbonsäuren, z.B. Ester der (Meth-)Acrylsäure, der Maleinsäure, der Fumarsäure, der Crotonsäure und der Itakonsäure mit (un-)verzweigten $C_1$- bis $C_{20}$-Alkanolen, wie Methanol, Ethanol, n- und iso-Propanol, n-, sec.- und tert.-Butanol, 2-Ethylhexanol, Octanol, Dodecanol, Alfol[R]-Alkoholen, Polyalkoholen wie Ethylen-, Propylen- und Butylenglykol und Pentaerythrit;

– Allyl- und Vinylester der (Meth-)Acrylsäure, der (Di-)Acetessigsäure;

– Vinyl- und Allylverbindungen von Silanen, Glycidylalkohol, Aminoalkoholen, α-Chloralkylcarbonsäuren, Dichlortriazinen;

– Vinylidenhalogenide wie Vinylidenchlorid;

– Acryltrialkoxysilane;

– ethylenisch ungesättigte Mono- und Dicarbonsäuren, deren Anhydride, deren Amide und deren gegebenenfalls mit (Poly-) Alkoxylgruppen (Ethoxyl- oder Propoxylgruppen) veretherten N-Methylolamide, z.B. (Meth-)Acrylsäure, (Meth-)Acrylamid, N-Methylol(meth)acrylamid, Maleinsäureanhydrid, Crotonsäure, Crotonsäureamide;

– Vinylether;

– Vinylderivate heterocyclischer Verbindungen, z.B. N-Vinylpyridin und N-Vinylpyrrolidon;

– Vinylsulfonsäure und deren Salze;

– α-Olefinen, z.B. Propylen, Butylen, Octen, Dodecen. Monomere mit stark polaren Gruppen, z.B. Vinylsulfonat, die Carbonsäuren, Amide und Anhydride sollten vorzugsweise insgesamt nur bis zu 5 Gew.-%, insbesondere bis zu 2 Gew.-%, bezogen auf die bei den Reaktionsbedingungen flüssigen Monomeren, eingesetzt werden.

Di- und Polyvinyl- und -allylverbindungen von Di- und Polycarbonsäuren und Phenolen sowie Vinyl- und Allyl(meth)acrylat und/oder -crotonat können in Mengen von 0 bis 2, vorzugsweise bis 0,5 Gew.-%, bezogen auf die flüssigen Monomeren copolymerisiert werden. Die Monomeren aus den genannten Gruppen können einzeln oder als Vorgemische, nach Dosierbeginn von Schutzkolloid auch als Voremulsion in das Reaktionsgefäss gegeben oder dosiert werden. Es ist möglich, einzelne dieser Monomeren ganz oder teilweise vorzulegen und den Rest zu dosieren. Der Einfachheit halber wird oft vorgezogen, die gewünschten Monomeren aus der genannten Gruppe vorzumischen und als Gemisch einzusetzen und so die Zusammensetzung dieser Monomerenphase über längere Zeit während der Reaktion weitgehend konstant zu halten.

Neben den genannten Monomeren wird in einer weiteren bevorzugten Ausführungsform des erfindungsgemässen Verfahrens Ethylen als Comonomer mitverwendet. Dazu wird das Reaktionsgefäss bereits vor oder auch während der Reaktion mit Ethylen bis zu einem Partialdruck von 200 bar, vorzugsweise bis 80 bar beaufschlagt. Bevorzugt erfolgt diese Beaufschlagung bereits vor der Reaktion, so dass das flüssige Reaktionsgemisch einen Teil des Ethylens bis zum Gleichgewicht des Gasraums mit der flüssigen Phase lösen kann. Die Zugabe des Ethylens kann einmal erfolgen, oder sein Partialdruck kann über längere Zeit, insbesondere bis zum Ende der Dosierung der bei den Reaktionsbedingungen flüssigen Monomeren durch Nachdosieren weitgehend konstant gehalten werden.

Durch das erfindungsgemässe Verfahren können auch bei höheren Konzentrationen an bei den Reaktionsbedingungen flüssigen Monomeren, also beispielsweise über 15 oder gar über 25 Gew.-%, bezogen auf das Gesamtgewicht des Reaktionsgemisches, höhere Ethylenmengen ins Polymerisat eingebaut werden als bei den bisherigen Verfahren. So können bevorzugte Polymerisate hergestellt werden, die höchstens 20 Gew.-% Einheiten enthalten, die sich nicht von Vinylchlorid, Vinylacetat und/oder Ethylen ableiten. Hierbei kann der Gehalt an Ethyleneinheiten bis zu 45 Gew.-%, vorzugsweise 5 bis 30 Gew.-%, bezogen auf Polymerisat, betragen. Die bei den Reaktionsbedingungen flüssigen Monomeren reagieren praktisch quantitativ ab.

Weiterhin kann durch den Zeitpunkt und die Menge der erstmaligen Schutzkolloidzugabe in einfacher Weise die Teilchengrössenverteilung der entstehenden Dispersionen gesteuert werden. Überdies kann die Polymerisationsgeschwindigkeit erhöht werden, da aufgrund der niedrigeren Viskosität eine raschere Abfuhr der Reaktionswärme möglich ist.

Diese niedrigere Viskosität von erfindungsgemäss hergestellten Dispersionen auch mit hohen Festgehalten ist insbesondere deshalb überraschend, da bekannt ist, dass durch Zusatz von Schutzkolloid zu wässrigen Dispersionen deren Viskosität gesteigert werden kann. Ein weiterer Vorteil des erfindungsgemässen Verfahrens liegt darin, dass bei der bevorzugten Verwendung erfindungsgemäss hergestellter Dispersionen zur Herstellung redispergierbarer Pulver, z.B. für den Einsatz im Bausektor als Kleber oder Zusatzmittel zu hydraulisch abbindenden Massen, aufgrund der geringeren Pfropfung des Schutzkolloids, insbesondere des Polyvinylalkohols (PVAL), am Ende der Polymerisation mehr freies Schutzkolloid vorhanden ist. Dies erübrigt zumindest teilweise weiteren Zusatz des Schutzkolloids, insbesondere von PVAL, bei oder nach der Trocknung.

Als Schutzkolloide werden die für die Polymerisation allgemein üblichen eingesetzt, z.B. Cellulosederivate oder wasserlösliche Polymerisate wie teilverseiftes Polyvinylacetat oder Vinylpyrrolidonpolymerisate. Bevorzugt wird mindestens ein Polyvinylalkohol mit einem Hydrolysegrad von 70 bis 99,8 mol-% (entsprechend Verseifungszahl von ca. 10 bis ca. 257), vorzugsweise 74 bis 99,5 mol-% (entsprechend Verseifungszahlen von ca. 20 bis ca. 240) und mit einem mittleren Polymerisationsgrad von 200 bis 3000 (entsprechend einer ungefähren Höppler-Viskosität einer 4 Gew.-%igen wässrigen Lösung bei 20 °C von ca. 3 bis ca. 50 mPas). Das Schutzkolloid, insbesondere der PVAL, wird in Mengen von insgesamt 0,5 bis 15 Gew.-%, vorzugsweise von 3 bis 10 Gew.-%, bezogen auf die bei den Reaktionsbedingungen flüssigen Monomeren, eingesetzt. Werden zusätzlich Comonomere verwendet, die bekanntermassen dispersionsstabilisierend (z.B. Vinylsulfonat), so kann z.B. schon der Zusatz von ca. 1 bis 3 Gew.-% Schutzkolloid sehr gute Ergebnisse liefern.

Es ist selbstverständlich möglich, Gemische unterschiedlicher Schutzkolloide zu verwenden, z.B. Gemische höher- und niedrigerviskoser, bzw. höher- und niedrigerverseifter PVAL's. Es können auch eines (oder einige) dieser Schutzkolloide eher und (ein) andere(s) später zugesetzt werden. Es sei auch daran erinnert, dass Polymerisate allgemein eine gewisse Bandbreite in ihrer Zusammensetzung aufweisen, also z.B. ein bestimmter PVAL, charakterisiert durch die obigen Merkmale, nicht nur einer einzigen Molekülspezies besteht.

Die Polymerisation wird vorzugsweise mittels sogenannter Redoxinitiatorsysteme durchgeführt, die im allgemeinen aus einer Kombination mindestens einer peroxidischen Verbindung und mindestens einem Reduktionsmittel bestehen. Eine dieser Komponenten kann ganz oder teilweise vorgelegt werden, die andere Komponente und gegebenenfalls der Rest der teilweise vorgelegten Komponente oder gegebenenfalls beide Komponenten werden dann im Verlaufe der Polymerisation dosiert. Beispielsweise kann die Oxydationskomponente vorgelegt werden, und man steuert die Polymerisation durch die Dosierung der Reduktionskomponente. Diese ist im allgemeinen die bevorzugte Ausführungsform.

Im allgemeinen benötigt man ca. 0,01 bis ca. 0,5 Gew.-%, vorzugsweise 0,03 bis 0,3 Gew.-% an Reduktionskomponente und ca. 0,01 bis ca. 2 Gew.-%, vorzugsweise 0,03 bis 0,8 Gew.-% an Oxydationskomponente, wobei vielfach besonders gute Ergebnisse erhalten werden, wenn das Molverhältnis von Oxydations- zu Reduktionskomponente von 0,5 bis 4 beträgt. Obige %-Angaben beziehen sich jeweils auf das Gesamtgewicht der bei den Reaktionsbedingungen flüssigen Monomeren.

Bevorzugte Beispiele für die Oxydationskomponente sind folgende peroxidischen Verbindungen:

Ammonium- und Kaliumpersulfat, -peroxodisulfat, Wasserstoffperoxid, Alkylhydroperoxide, wie tert.-Butyl-hydroperoxid, Peroxodiphosphate, wie Kalium-, Natrium- und Ammoniumperoxodiphosphat, sowie deren Gemische.

Als bevorzugte Beispiele für die Reduktionskomponente sind Verbindungen des Schwefels, in denen der Schwefel nicht in seiner formalen Oxydationsstufe +6 vorliegt, zu nennen. Insbesondere seien genannt: wasserlösliche Sulfite und Sulfoxylate wie Alkali-(Na-, K-) oder Ammoniumsulfit bzw. -hydrogensulfit oder Alkali-(Na-, K-) oder Zinkformaldehydsulfoxylat. Ebenso eignen sich Wasserstoff/Edelmetallkatalysatorkomponenten unter gleichzeitiger Verwendung geringer Mengen von Schwermetallsalzen als Aktivatoren.

Geeignete Initiatorsysteme werden u.a. «Fundamental Principles of Polymerization» G.F. Alelio, John Wiley and Sons Inc., New York, 1952, auf den Seiten 333 ff. und in DE-B-11 33 130 beschrieben.

Grundsätzlich ist auch der Einsatz von Radikalinitiatoren, z.B. den Persulfaten oder Peroxodiphosphaten in Abwesenheit eines Reduktionsmittels möglich. Sowohl bei diesem System als auch bei den vorhergenannten werden vorzugsweise in an sich bekannter Weise Spuren von Salzen geeigneter Schwermetalle, z.B. von Eisen oder Kupfer, zugegeben.

Nach der Polymerisation, allenfalls auch am Ende der Polymerisation, z.B. zur Nachpolymerisation, können, sofern dies gewünscht wird, auch anionische und/oder nichtionogene Emulgatoren in Mengen von 0 bis 4 Gew.-%, vorzugsweise bis 2 Gew.-%, bezogen auf den Festgehalt der Dispersion, zugesetzt werden. Als Beispiele werden genannt: Alkali- oder Erdalkalisalze von alkylierten Benzol- und Naphthalinsulfonsäuren, wie Natriumbenzylsulfonat, Alkalialkylsulfonate, wie z.B. Natriumlaurylsulfonat, Salze der Alkylschwefelsäuren, wie Natriumlaurylsulfat, ferner Natriumalkylsulfosuccinat bzw. Natriumalkylsulfosuccinatmono- und -diester, Natrium- oder Ammoniumsalze von Sulfatestern von Alkylphenoxipoly(ethoxylen)äthanolen, wie Octyl- oder iso-Nonylphenoxipoly (ethoxylen) äthanolen, sowie deren ethoxylierte Produkte, Ethylenoxidaddukte von Alkylglycolen und Alkylphenolen, Blockcopolymere aus Ethylenoxid und Propylenoxid sowie sulfonierte Fettsäureamide, Fettalkohol- oder Fettamin/Ethylenoxidadditionsprodukte.

Das erfindungsgemässe Verfahren wird vorzugsweise bei pH-Werten von 2,5 bis 7 durchgeführt. Dieser Bereich kann aber gegebenenfalls auch über- oder unterschritten werden. Zur Stabilisierung des pH können auch übliche Puffersubstanzen zugesetzt werden, z.B. Bicarbonate, Borate, Acetate, Citrate, Gemische primärer und sekundärer Phosphate der Alkalimetalle.

Das erfindungsgemässe Verfahren wird vorzugsweise nach dem Dosierverfahren hergestellt, jedoch kann die gesamte Monomerenmenge vorgelegt werden. Beim Dosierverfahren kann mindestens ein Monomeres ganz oder teilweise vorgelegt werden, während die anderen zur Gänze, sowie gegebenenfalls der Rest der teilweise vorgelegten Monomeren dosiert werden.

Nachdem Umsatzmessungen in der Praxis vielfach schwierig sind, wird vorzugsweise mit dem Zusatz von Schutzkolloid frühestens bei einem (leicht zu ermittelnden) Festgehalt der Dispersion von 2 Gew.-%, vorzugsweise 5 Gew.-%, und spätestens bei einem Festgehalt von 40 Gew.-%, besser von 30 Gew.-%, insbesondere von 20 Gew.-% begonnen.

Die nach dem erfindungsgemässen Verfahren hergestellten Dispersionen eignen sich als Kleber, zum Beschichten von Papier, Geweben und Vliesen, aus Natur- oder Kunstfasern, Glasfasern, Holzfasern usw., als Zusatz oder als Bindemittel in Beton- und Mörtelmischungen.

Die folgenden Beispiele dienen der Erläuterung der Erfindung. Die Ergebnisse der Beispiele und Vergleichsversuche sind in der beigefügten Tabelle aufgeführt. %-Angaben verstehen sich, soweit nicht anders angegeben, stets als Gewichtsprozente und beziehen sich

(a) auf Gesamtgewicht der bei den Reaktionsbedingungen flüssigen Monomeren

(b) auf den Festgehalt

(c) auf das Gesamtgewicht der Dispersion.

Die Viskositäten der PVAL's in mPas wurden, wie vorstehend beschrieben, nach Höppler bestimmt, die der Dispersionen mit dem Epprecht-Rheometer, wobei die Messeinheit jeweils in () angegeben ist.

Druckangaben erfolgten nur, wenn der Anfangsdruck höher lag als der Druck der umgebenden Atmosphäre.

Allgemeine Versuchsbeschreibung der erfindungsgemässen Beispiele (numeriert).

In dem evakuierten und N₂-gespülten Autoklaven wurden ein Teil des Wassers, eine Spur Eisenammoniumsulfat und ein Teil der gegebenenfalls vorgemischten flüssigen Monomeren (siehe Tabelle) unter Rühren vorgelegt und auf die gewünschte Temperatur erwärmt. Dann wurde gegebenenfalls Ethylen bis zu dem in der Tabelle angegebenen Anfangsdruck aufgedrückt und die Polymerisation durch Zudosieren der Katalysatorlösungen gestartet. Bei den in der Tabelle angegebenen Versuchen wurden jeweils gleiche Volumina wässriger Lösungen von Ammonium- (oder Kalium-)persulfat und Natrium-Formaldehydsulfoxylat verwendet. Die Konzentration der Persulfatlösungen war doppelt so hoch wie die des Sulfoxylats. Der pH wurde durch Zudosieren von Ammoniak auf 2,5 bis 5 gehalten. Die Dosierung der Polyvinylalkohollösungen wurde ca. 30 Minuten nach Reaktionsbeginn bei Festgehalten von ca. 2 bis ca. 20 Gew.-% gestartet. Weitere 30 bis 45 Minuten später wurde die Monomerdosierung eingefahren.

Nach Erreichen des maximalen Festgehalts, in der Regel 1 h nach Dosierende, wurde noch 2 h nachpolymerisiert, falls erwünscht der pH z.B. auf 7 gestellt und die Dispersion gegebenenfalls entspannt und schliesslich vom Restmonomeren durch Evakuieren befreit. Gegebenenfalls wurde nach Ende der Polymerisation Emulgator zugesetzt.

Allgemeine Versuchsvorschrift für die Vergleichsversuche (mit Buchstaben bezeichnet).

In dem evakuierten und N₂-gespülten Autoklaven wurde ein Teil des Wassers, eine Spur Eisenammoniumsulfat, etwas Kaliumpersulfat, der Polyvinylalkohol und gegebenenfalls der Emulgator (siehe Tabelle) vorgelegt und auf die in der Tabelle angegebenen Temperaturen erwärmt. Dann wurde unter Rühren ein Teil der Monomeren (siehe Tabelle) vorgelegt, gegebenenfalls Ethylen bis zum gewünschten Druck aufgepresst und die Polymerisation durch Zugabe von gleichen Volumina wässriger Lösungen von Ammonium- (oder Kalium-)persulfat und Natrium-Formaldehydsulfoxylat gestartet. Die Konzentration der Persulfatlösung war doppelt so hoch wie die der Reduktionsmittellösung.

Der pH wurde durch Zudosieren von Ammoniak bzw. Ameisensäure auf 2,5 bis 5 gehalten. Die Dosierung der restlichen Monomermengen erfolgte analog der vorhergehenden Vorschrift kontinuierlich.

Nach Erreichen des maximalen Festgehaltes, in der Regel 3 bis 9 h nach Dosierende, wurde noch 2 h nachpolymerisiert, falls erforderlich der pH z.B. auf 7 eingestellt und die Dispersion gegebenenfalls entspannt und durch Evakuieren von Restmonomeren befreit.

Tabelle

| Beispiel/Vergleichsversuch | A | 1 | B | 2 | C | 3 |
|---|---|---|---|---|---|---|
| 1 Monomervorlage % (a) | 100 | 21 | 5 | 5 | 21,3 | 21,3 |
| 2 Reaktionstemp. °C | 45 | 45 | 55 | 55 | 40 | 40 |
| 3 Druck bar (Ethylen) | 28 | 28 | – | – | 55 | 55 |
| 4 Schutzkolloid PVAL: Viskosität mPas/ | 1. 25/140/2,05 | 25/140/2,05 | 4/140/5,9 | 4/140/7,1 | 28/60/2,5 | 28/60/3,8 |
| Verseifungszahl/% (a) | 2. 5/140/4,7 | 5/140/4,7 | | | 13/140/2,5 | 13/140/5,8 |
| | 3. | | | | 5/140/3,2 | |
| Emulgatoren Art/% (b) | | | | | | |
| 5 Arcopal[R]N230 | | | | | | |
| 6 Genapol[R]X150 | | | | | | 1.0 |
| Dispersion: | | | | | | |
| 7 Festgehalt % (c) | 55 | 55,2 | 48,2 | 50,2 | 50,1 | 50,3 |
| 8 pH | 3,5 | 7,6 | 3,5 | 6,2 | 7,6 | 6,2 |
| 9 Viskosität mPas | 3500 (CIII) | 930 (CIII) | | 222 (BIII) | 7665 (DIII) | 3020 (CIII) |
| 10 Strukturviskosität | 1,80 | 0,59 | nicht messbar | 0,11 | 3,24 | 1,80 |
| 11 Teilchengrösse um | 0,5–1,0 | 0,16–0,90 | | 0,20–0,48 | 0,18–0,74 | 0,12–0,75 |
| 12 Anzugsgeschwindig- keit s | 2,5 | 1,6 | stark rheopex | 2,9 | 2,7 | 2,4 |
| Polymer jeweils % (b) | | | | | | |
| 13 Vinylchlorid | | | | | 65,7 | 55,9 |
| 14 Vinylacetat | 83,1 | 83,1 | 94,4 | 93,4 | 11,6 | 18,6 |
| 15 Ethylen | 11,3 | 11,3 | | | 16,4 | 17,4 |
| 16 Hydroxypropylacrylat | | | | | | |
| 17 Acrylamid/Acrylsäure | | | | | | |
| 18 Ethylhexylacrylat | | | | | | |
| 19 Vinylsulfonat | | | | | | |
| 20 Polymerisationsdauer h | ~8 | 11,5 | ~3 | ~3 | 19,5 | 16,5 |
| 21 Beginn der Schutzkol- loiddosierung bei Fest- gehalt %(c) | – | 12,8 | – | 17,3 | – | 11,2 |
| 22 Mindestfilmbilde- temperatur ( °C) | 3 | 3 | 21 | 17 | 18 | 9 |
| 23 Glasübergangs- temperatur ( °C) | – | – | – | – | 24,3 | 18,3 |

Tabelle (Fortsetzung)

| Beispiel/Ver-gleichsversuch | D | 4 | E | 5 | 6 | 7 |
|---|---|---|---|---|---|---|
| 1 | 21,1 | 21,1 | 20 | 20 | 22,5 | 20,9 |
| 2 | 40 | 40 | 43 | 43 | 45 | 43 |
| 3 | 50 | 50 | 55 | 55 | 46 | 55 |
| 4 | 28/60/8,95 | 28/60/9,0 | 4/140/3,7 28/60/3,7 | 4/140/3,6 28/60/3,6 | 4/140/5,9 5/240/2,5 | 4/140/7,4 |
| 5 | | | | | | |
| 6 | 0,25 | 0,25 | | | | |
| 7 | 46,5 | 49,5 | 50 | 51 | 51,6 | 63,7 |
| 8 | 6,5 | 6,6 | 6,6 | 6,1 | 8,6 | 6,3 |
| 9 | Ansatz musste abgebrochen werden, nicht mehr rührbar | 5147 (DIII) | 10220 (DIII) | 1379 (CIII) | 320 (BIII) | 1633 (CIII) |
| 10 | | 1,82 | 2,33 | 2,27 | 0,81 | 1,07 |
| 11 | | 0,26–0,66 | 0,30–1,05 | 0,20–0,58 | 0,18–0,74 | 0,27–1,32 |
| 12 | | 2,1 | > 4 | 1,5 | 2,1 | 1,8 |
| 13 | 59,1 | 58,9 | 55,3 | 55,9 | 52,0 | 48,3 |
| 14 | 19,7 | 19,5 | 18,4 | 18,6 | 23,7 | 26,0 |
| 15 | 13,9 | 14,3 | 20,9 | 20,1 | 17,9 | 20,3 |
| 16 | | | | | | |
| 17 | | | | | | |
| 18 | | | | | | |
| 19 | | | | | | |
| 20 | 17,2 | 16,5 | 17,25 | 14,25 | 11,75 | 14,75 |
| 21 | – | 10,5 | – | 7,2 | 8,2 | 9,8 |
| 22 | – | 21 | 8,5 | 9 | < 0 | 3 |
| 23 | 26,3 | 23,5 | 12,1 | 13,8 | 16 | 4,4 |

| Beispiel/Ver-gleichsversuch | 8 | 9 | 10 | 11 | F | 12 |
|---|---|---|---|---|---|---|
| 1 | 21,1 | 23 | 22,5 | 4,4 | 21,3 | 21 |
| 2 | 43 | 43 | 43 | 43 | 43 | 43 |
| 3 | 50 | 55 | 55 | 55 | 50 | 55 |
| 4 | 13/140/3,4 | 4/140/6,1 | 4/140/3,8 28/60/3,8 | 4/140/3,6 28/60/3,6 | 28/60/2,6 | 4/140/4,3 |
| 5 | 1,35 | | | | 1,38 | 1,95 |
| 6 | | | | | | |
| 7 | 51 | 52 | 54,9 | 50,6 | 50,3 | 71,4 |
| 8 | 8,5 | 6,8 | 7,1 | 7,1 | 6,6 | 6,0 |
| 9 | 213 (BIII) | 213 (BIII) | 5475 (DIII) | 2615 (CIII) | 310 (BIII) | 11899 (DIII) |
| 10 | 0,87 | 1,31 | 2,04 | 0,81 | 1,79 | 2,15 |
| 11 | 0,24–0,82 | 0,28–0,52 | 0,22–1,02 | 0,075–0,43 | 0,25–1,175 | |
| 12 | 3,1 | 2,2 | 2,0 | 2,2 | 3,0 | 4 |
| 13 | 57,9 | 45,1 | 57,3 | 57,8 | 58,8 | 63,0 |
| 14 | | 24,3 | 12,9 | 19,3 | 19,6 | 21,0 |
| 15 | 18,8 | 23,3 | 23,4 | 17,1 | 18,1 | 16,0 |
| 16 | | 1,36 | AAA:1,0 | AMA:0,2 | | |
| 17 | | 0,75/0,75 | | | | |
| 18 | 19,3 | | | | | |
| 19 | 0,07 | | | | 0,08 | |
| 20 | 14,5 | 14,5 | 14,5 | 12,5 | 12,25 | 15,5 |
| 21 | 12 | 10,5 | 10 | 11 | – | 13 |
| 22 | 1 | 0 | 11,5 | 13,5 | 12 | 17,5 |
| 23 | – | 4,8 | 9 | 20 | 18,6 | 20,3 |

AAA = Allylacetylacetat
AMA = Allylmethacrylat

## Patentansprüche

1. Verfahren zur Herstellung von durch Schutzkolloid stabilisierten wässrigen Polymerdispersionen mit Festgehalt von 20 bis 75 Gew.-%, bezogen auf Gesamtgewicht, durch einstufige Polymerisation von bei den Reaktionsbedingungen flüssigen Monomeren, von denen mindestens 50 Gew.-% aus Vinylhalogeniden und/oder Vinylalkanoaten bestehen, und gegebenenfalls Ethylen bis zu einem Partialdruck von 200 bar bei Temperaturen von 0 bis 120 °C und Drücken bis 200 bar mittels zumindest teilweise wasserlöslicher Radikalinitiatorsysteme, gegebenenfalls in Gegenwart üblicher Zusatzstoffe, dadurch gekennzeichnet, dass mit der Dosierung von Schutzkolloid als erstem Dispergierhilfsstoff erst nach einem Umsatz von 1 bis 60 Gew.-%, bezogen auf Gesamtgewicht der bei den Reaktionsbedingungen flüssigen Monomeren, begonnen wird.

2. Verfahren nach Anspruch 1, dadurch gekennzeichnet, dass als Schutzkolloid mindestens ein Polyvinylalkohol mit einem Hydrolysegrad von 70 bis 99,8 mol-% und mittlerem Polymerisationsgrad von 200 bis 3000 eingesetzt wird.

3. Verfahren nach Anspruch 1 oder 2, dadurch gekennzeichnet, dass Schutzkolloid in Mengen von 0,5 bis 15 Gew.-%, bezogen auf die bei den Reaktionsbedingungen flüssigen Monomeren, eingesetzt wird.

4. Verfahren nach einem der vorangehenden Ansprüche, dadurch gekennzeichnet, dass 1 bis 40 Gew.-% der bei den Reaktionsbedingungen flüssigen Monomeren vorgelegt und der Rest dosiert wird.

5. Verfahren nach einem der vorangehenden Ansprüche, dadurch gekennzeichnet, dass höchstens 20 Gew.-% weiterer bei den Reaktionsbedingungen flüssige Comonomere mitverwendet werden.

6. Verfahren nach einem der vorangehenden Ansprüche, dadurch gekennzeichnet, dass darüber hinaus Ethylen als Comonomeres vorzugsweise bei Partialdrücken bis zu 80 bar eingesetzt wird.

7. Verwendung der gemäss einem der vorstehenden Ansprüche hergestellten Dispersionen zur Herstellung redispergierbarer Pulver.

## Revendications

1. Procédé pour préparer des dispersions aqueuses de polymères à teneurs en matière solide comprises entre 20 et 75% en poids par rapport à la masse totale, stabilisées au moyen de colloïde protecteur, par une polymérisation en une seule étape de monomères liquides dans les conditions réactionnelles, dont au moins 50% en poids sont constitués d'halogénures de vinyle et/ou d'alcanoates de vinyle, et éventuellement d'éthylène jusqu'à une pression partielle de 200 bar, effectuée à des températures de 0 à 120 °C et sous des pressions pouvant aller jusqu'à 200 bar, à l'aide de systèmes amorceurs radicalaires au moins partiellement solubles dans l'eau, éventuellement en présence d'additifs usuels, procédé caractérisé en ce qu'on ne commence l'introduction progressive du colloïde protecteur, comme premier adjuvant de dispersion, que lorsque le taux de conversion a atteint une valeur de 1 à 60% en poids par rapport à la masse totale des monomères qui sont liquides dans les conditions de la réaction.

2. Procédé selon la revendication 1 caractérisé en ce qu'on utilise, comme colloïde protecteur, au moins un poly-(alcool vinylique) ayant un degré d'hydrolyse de 70 à 99,8% en moles et un degré de polymérisation moyen de 200 à 3000.

3. Procédé selon l'une des revendications 1 et 2, caractérisé en ce que le colloïde protecteur est mis en jeu en des quantités de 0,5 à 15% en poids par rapport aux monomères qui sont liquides dans les conditions de la réaction.

4. Procédé selon l'une quelconque des revendications précédentes, caractérisé en ce qu'on met en place dès le début de 1 à 40% en poids des monomères qui sont liquides dans les conditions de la réaction, et on introduit le reste progressivement.

5. Procédé selon l'une quelconque des revendications précédentes, caractérisé en ce qu'on utilise au plus 20% en poids d'autres comonomères liquides dans les conditions de la réaction.

6. Procédé selon l'une quelconque des revendications précédentes, caractérisé en ce qu'on utilise en outre de l'éthylène comme comonomère, de préférence sous des pressions partielles au plus égales à 80 bar.

7. Application des dispersions préparées selon l'une quelconque des revendications précédentes à la préparation de poudres redispersables.

## Claims

1. Process for the manufacture of aqueous polymer dispersions that are stabilised by protective colloid and have a solids content of from 20 to 75% by weight, calculated on the total weight, by single-stage polymerisation of monomers that are liquid under the reaction conditions, at least 50% by weight of which comprise vinyl halides and/or vinyl alkanoates, and, optionally, ethylene up to a partial pressure of 200 bar, at temperatures of from 0 to 120 °C and pressures of up to 200 bar by means of at least partially water-soluble radical initiator systems, optionally in the presence of customary additives, characterised in that metering in of protective colloid as the first dispersing auxiliary is begun only after from 1 to 60% by weight has been converted, calculated on the total weight of the monomers that are liquid under the reaction conditions.

2. Process according to claim 1, characterised in that the protective colloid used comprises at least one polyvinyl alcohol having a degree of hydrolysis of from 70 to 99.8 mol % and a mean degree of polymerisation of from 200 to 3000.

3. Process according to claim 1 or 2, characterised in that the protective colloid is used in quantities of from 0.5 to 15% by weight, calculated on the monomers that are liquid under the reaction conditions.

4. Process according to any one of the preceding claims, characterised in that from 1 to 40% by weight of the monomers that are liquid under the reaction conditions are used initially, and the remainder is metered in.

5. Process according to any one of the preceding claims, characterised in that at most 20% by weight of other comonomers that are liquid under the reaction conditions are used concomitantly.

6. Process according to any one of the preceding claims, characterised in that, in addition, ethylene is used as a comonomer, preferably at partial pressures of up to 80 bar.

7. Use of the dispersions manufactured according to any one of the preceding claims for the preparation of redispersible powders.